# EUROPEAN PATENT SPECIFICATION

(11) **EP 2 794 488 B1**
(45) Date of publication and mention of the grant of the patent: **11.12.2019**
(21) Application number: 12809252.5
(22) Date of filing: 18.12.2012
(51) Int. Cl.: C01F 17/00, B01J 23/00, B01J 35/10

(54) **COMPOSITE OXIDE, METHOD FOR PRODUCING THE SAME, AND CATALYST FOR EXHAUST GAS PURIFICATION**
VERBUNDOXID, VERFAHREN ZU DESSEN HERSTELLUNG UND KATALYSATOR ZUR ABGASREINIGUNG
OXYDE COMPOSITE, SON PROCÉDÉ DE PRODUCTION ET CATALYSEUR POUR LA PURIFICATION DE GAZ D'ÉCHAPPEMENT

(30) Priority: 21.12.2011 JP 2011279120
(43) Date of publication of application: 29.10.2014
(73) Proprietor: Rhodia Opérations, 75009 Paris (FR)
(72) Inventor: ROHART, Emmanuel, Shanghai 201108 (CN); OHTAKE, Naotaka, Anan-city 774-0022 (JP)
(74) Representative: Senninger, Thierry
(86) International application number: PCT/EP2012/075911
(87) International publication number: WO 2013/092560

(56) References cited:
- WO-A2-2007/131902
- JP-A- 2005 021 878
- US-B1- 6 350 421

## Description

### FIELD OF ART

The present invention relates to a composite oxide which may be used for catalysts, functional ceramics, solid electrolyte for fuel cells, abrasive, and the like, in particular, which may suitably be used as a co-catalyst material for catalysts for purifying vehicle exhaust gas, which reduces or eliminates NOx, and has excellent heat resistance. The present invention also relates to a method for producing the composite oxide, and a catalyst for purifying exhaust gas using the same.

### BACKGROUND ART

Internal combustion engines, such as vehicle engines, operate at varying air-fuel (A/F) ratio in the combustion chamber, such as the stoichiometric (stoichiometric operation), fuel-rich compared to the stoichiometric (rich operation), or fuel-poor compared to the stoichiometric (lean operation). Lean burn engines and direct-injection engines have been put into practical use, which burn the fuel in a leaner atmosphere (excess-oxygen atmosphere) for the purpose of improving fuel efficiency in such internal combustion engines.

In such engines, however, conventional three-way catalysts cannot fully exhibit their NOx-elimination capacity in oxygen-excessive exhaust gas. In addition, emission limit of NOx in exhaust gases has recently become more and more strict, and effective elimination of NOx from exhaust gases even at high temperatures is demanded.

There is a method in current practice for eliminating NOₓ by adsorbing NOₓ by a NOₓ adsorber under lean conditions, and desorbing NOₓ from the NOₓ adsorber under stoichiometric conditions and reducing and discharging the desorbed NOₓ as N₂. However, the A/F ratio usually fluctuates and such reduction may not occur effectively, so that it is required to control the A/F ratio with an oxygen storage component to promote the reduction.

Usually, the NOₓ adsorber is predominantly a base material, such as an alkaline earth metal, typically a barium compound. On the other hand, the oxygen storage component is usually an oxide mainly of cerium.

As a NOx-eliminating catalyst having an oxygen adsorption-desorption effect, Patent Publication 1 proposes a catalyst composed of a compound of cerium and barium carrying a precious metal, such as Pt.

However, when such a catalyst is exposed to a temperature of as high as 800 °C, a composite oxide BaCeO₃ is formed, which degrades the NOx adsorption capacity. Formation of BaCeO₃ also disadvantageously increases the CeO₂ crystallite size, decreases the specific surface area, which affects the oxygen adsorption, and causes sintering of the precious metal components, such as Pt. Consequently, the active sites for NOx-adsorption/reduction are reduced, and thus the NOx-eliminating capacity is deteriorated.

### PRIOR ART REFERENCES

### Patent Publication

Patent Publication 1: JP-2005-21878-A

US 6,350,421 discloses compositions that may be used for NOₓ storage. The composition of example 14 comprises 0.85% of SiO₂ which is lower than the claimed value.

### SUMMARY OF THE INVENTION

It is an object of the present invention to provide a composite oxide and a catalyst for purifying exhaust gas employing the composite oxide, which oxide has excellent heat resistance, including that a large specific surface area is maintained even when the composite oxide is used in a high temperature environment, and that, even after calcination at 800 °C for 2 hours, no BaCeO₃ phase, which deteriorates co-catalytic performance, is detected and increase in the CeO₂ crystallite size is inhibited, and which, in particular, is suitable as a co-catalyst of a catalyst for purifying exhaust gas.

It is another object of the present invention to provide a method for producing a composite oxide, which allows easy production of the above-mentioned composite oxide of the present invention with excellent heat resistance.

According to the present invention, the composite oxide is as defined in claims 1-4.

According to the present invention, there is also provided a method for producing the composite oxide which is disclosed in claim 5.

According to the present invention, there is also provided a catalyst for purifying exhaust gas comprising the composite oxide of the present invention.

The composite oxide according to the present invention contains cerium, an alkaline earth metal element which is barium, and silicon at a particular ratio, has specific properties, and has excellent heat resistance, so that the present composite oxide is particularly useful as a co-catalyst for a catalyst for purifying exhaust gas. Since the composite oxide of the present invention has such properties, the active NOₓ adsorption sites are not decreased even when the oxide is exposed to high temperatures, so that a high NOₓ adsorption may be maintained under lean conditions. Further, an oxygen storage component, CeO₂, maintains a large specific surface area without being formed into an inactive compound BaCeO₃, and is located close to the alkaline earth metal element, which is the NOₓ adsorption site, so that the present composite oxide is excellent in oxygen desorption capacity under rich conditions, and instantaneously turns the gas atmosphere to the stoichiometry to promote reduction of NOx.

The method for producing a composite oxide according to the present invention, including steps (A) to (G), allows easy production of the composite oxide of the present invention.

### EMBODIMENTS OF THE INVENTION

The present invention will now be explained in more detail.

The composite oxide according to the present invention contains 50 to 98 mass%, preferably 65 to 95 mass%, more preferably 80 to 90 mass% of a cerium-containing oxide, 1 to 30 mass%, preferably 1 to 20 mass%, more preferably 1 to 10 mass% of an oxide of barium, and 5 to 18 mass%, more preferably 10 to 15 mass% of SiO₂.

The cerium-containing oxide consists of oxides of cerium and and at least one element selected form the group consisting of rare earth metal elements other than cerium and including yttrium (referred to as particular rare earth metal elements hereinbelow), zirconium, and aluminum, at 85:15 to 100:0 by mass. When the cerium-containing oxide requisitely contains at least one element selected from the group consisting of the particular rare earth elements, zirconium, and aluminum, this ratio is preferably 85:15 to 95:5.

If the content of cerium oxide in the cerium-containing oxide is less than 85 mass%, heat resistance may be low. If silicon is not contained, sufficient heat resistance is not achieved. If the content of barium is over 30 mass% in terms of oxide, the specific surface area may be small.

The particular rare earth metal elements may be, for example, yttrium, lanthanum, praseodymium, neodymium, samarium, europium, gadolinium, terbium, dysprosium, holmium, erbium, thulium, ytterbium, lutetium, or a mixture of two or more of these. Among these, yttrium, lanthanum, praseodymium, neodymium, or a mixture of two or more of these is particularly preferred.

In the present invention, yttrium is expressed in terms of oxide as Y₂O₃, lanthanum as La₂O₃, cerium as CeO₂, praseodymium as Pr₆O₁₁, neodymium as Nd₂O₃, samarium as Sm₂O₃, europium as Eu₂O₃, gadolinium as Gd₂O₃, terbium as Tb₄O₇, dysprosium as Dy₂O₃, holmium as Ho₂O₃, erbium as Er₂O₃, thulium as Tm₂O₃, ytterbium as Yb₂O₃, and lutetium as Lu₂O₃.

In the present invention, zirconium is expressed in terms of oxide as ZrO₂, aluminum as Al₂O₃, and barium as BaO.

Barium is a preferred alkaline earth metal for fully exhibiting the performance of the catalyst.

The composite oxide according to the present invention has a property of exhibiting a specific surface area of not smaller than 60 m²/g, preferably not smaller than 80 m²/g, more preferably not smaller than 85 m²/g, as measured by the BET method after calcination at 800 °C for 2 hours. The maximum of this specific surface area is not particularly limited, but about 150 m²/g. With the specific surface area of less than 60 m²/g as measured by the BET method after calcination at 800 °C for 2 hours, the active sites where NOₓ adsorption/desorption occur are decreased, and the NOx-elimination capacity is low.

Further, the composite oxide of the present invention has a property of exhibiting a specific surface area of preferably not smaller than 30 m²/g, more preferably not smaller than 35 m²/g, most preferably not smaller than 50 m²/g, as measured by the BET method after calcination at 900 °C for 2 hours. The maximum of this specific surface area is not particularly limited, but about 120 m²/g.

As used herein, the specific surface area is a value measured by the BET method employing nitrogen gas adsorption, which is the most standard technique for measuring the specific surface area of powders.

The composite oxide according to the present invention has properties of having no BaCeO₃ phase and having the CeO₂ crystallite size in the (111) phase of not larger than 15 nm, preferably not larger than 13 nm, as determined by X-ray diffraction after calcination at 800 °C for 2 hours. It is particularly preferred that the composite oxide of the present invention has no BaCeO₃ phase as determined byX-raydiffraction after calcination at 900 °C for 2 hours. With such properties, excellent heat resistance is maintained.

As used herein, "having no BaCeO₃ phase" means that no diffraction peak derived from BaCeO₃ phase is observed by X-ray diffraction. This means that no peak is observed which interferes with the peak derived from CeO₂, and no peak is observed at 2*θ* = 51°, where BaCeO₃ has high peak intensity.

The crystallite size in the (111) plane may be calculated with the Scherrer equation from the peak near 2*θ* = 28° of the X-ray diffraction spectrum determined by an X-ray diffractometer (MultiFlex manufactured by RIGAKU CORPORATION) using CuKα beam.

It is not known exactly why the composite oxide of the present invention has the properties excellent in heat resistance as mentioned above. However, it is assumed to be attributed to formation of an silicon-containing layer on the surface of the cerium oxide particles, and subsequent adsorption of the alkaline earth metal element on the layer, so that direct contact between cerium and the alkaline earth metal element is inhibited, formation of BaCeO₃ phase is inhibited even when the composite oxide is exposed to high temperatures, a large specific surface area is maintained, and increase in the crystallite size of CeO₂ is suppressed. The composite oxide of the present invention having such an estimated structure is assumed to have been obtained by, for example, the particular precipitation step in the production method of the present invention to be discussed later, wherein to a cerium suspension is added the other elements prior to precipitation, in particular, the step wherein the alkaline earth metal element is precipitated after the other elements.

The method for producing the composite oxide of the present invention is not particularly limited. In order to reproduce the above-mentioned properties efficiently and to obtain a composite oxide of still more excellent properties, the following production method according to the present invention, for example, may preferably be employed.

The method according to the present invention, which allows easy and reproducible production of the composite oxide of the present invention, includes first step (A) of providing a cerium solution not less than 90 mole % of which cerium ions are tetravalent.

A cerium compound used in step (A) may be, for example, a ceric nitrate solution or ammonium ceric nitrate, with the former being particularly preferred.

In step (A), the initial concentration of the cerium solution not less than 90 mole % of which cerium ions are tetravalent may be adjusted to usually 5 to 100 g/L, preferably 5 to 80 g/L, more preferably 10 to 70 g/L cerium in terms of CeO₂. For adjustment of concentration of the cerium solution, water is usually used, and deionized water is particularly preferred. At too high an initial concentration, crystallinity of the precipitate to be discussed later will not sufficiently be high, sufficient pores will not be formed, and the heat resistance of the eventually resulting composite oxide will be deteriorated. Too low an initial concentration lowers productivity and is not industrially advantageous.

In the method of the present invention, next, step (B) of heating and holding the cerium solution obtained from step (A) up to and at not lower than 60 °C to obtain a cerium suspension is performed. A reaction vessel used in step (B) may either be sealed or open type, and an autoclave reactor may preferably be used.

In step (B), the heating and holding temperature is not lower than 60 °C, preferably 60 to 200 °C, more preferably 80 to 180 °C, most preferably 90 to 160 °C. The heating and holding time is usually 10 minutes to 48 hours, preferably 30 minutes to 36 hours, more preferably 1 hour to 24 hours. Without sufficient heating and holding, crystallinity of the precipitate to be discussed later will not sufficiently be high, pores having sufficient volume will not be formed, and the heat resistance of the eventually resulting composite oxide may not be improved sufficiently. Too long heating and holding affect the heat resistance only little, and is not industrially advantageous.

The method of the present invention includes step (C) of adding at least precursors of barium oxide and silicon oxide to the cerium suspension obtained from step (B) to obtain a suspension.

When an oxide of at least one element selected from the group consisting of the particular rare earth metal elements, zirconium, and aluminum, is to be contained in the eventually resulting composite oxide, a precursor of an oxide of at least one element selected from the group consisting of the particular rare earth metal elements, zirconium, and aluminum may be added to the cerium suspension in step (C).

The precursor of barium oxide maybe, for example, barium nitrate.

The precursor of silicon oxide may be any compound as long as it turns to silicon oxide by oxidation treatment such as calcination, and may be colloidal silica, siliconate, or a quaternary ammonium silicate sol, with colloidal silica being preferred in the light of production costs and reduction of environmental burden.

The precursor of an oxide of one of the particular rare earth metal elements may be any compound as long as it turns to an oxide of the particular rare earth metal element by oxidation treatment such as calcination, and may be, for example, a nitric acid solution containing the particular rare earth metal element.

The precursor of zirconium oxide may be, for example, zirconium oxynitrate.

The precursor of aluminum oxide may be, for example, aluminum nitrate.

The amount of each precursor used in step (C) may suitably be decided so that the resulting oxide is within the content range in the composite oxide of the present invention.

Step (C) may be performed after the cerium suspension obtained from step (B) is cooled.

Such cooling may usually be carried out under stirring according to a commonly known method. Cooling in an atmosphere or forced cooling with cooling tubes may be employed. The cooling may be carried out down to usually 40 °C or lower, preferably about a room temperature of 20 to 30 °C.

In step (C), before adding the various precursors, the salt concentration of the cerium suspension may be adjusted by removing the mother liquor from the cerium suspension or by adding water. The removal of the mother liquor may be effected, for example, by decantation, Nutsche method, centrifugation, or filter-pressing. In this case, a slight amount of cerium is removed with the mother liquor, so the amount of each precursor and water to be added next may be adjusted, taking this removed amount of cerium into consideration.

The method of the present invention includes step (D) of heating and holding the cerium suspension containing the various precursors up to and at not lower than 100 °C, preferably 100 to 200 °C, more preferably 100 to 150 °C.

In step (D), the duration of the heating and holding may be usually 10 minutes to 6 hours, preferably 20 minutes to 5 hours, more preferably 30 minutes to 4 hours.

In step (D) of heating and holding, at lower than 100 °C, the crystallinity of the precipitate to be discussed later will not sufficiently be high, resulting in insufficient heat resistance of the ultimate composite oxide. Too long a period of heating and holding affects little the heat resistance and is not industrially advantageous.

The method of the present invention includes step (E) of adding a first precipitant to the suspension obtained from step (D) to precipitate the elements other than barium.

The first precipitant used in step (E) may be a base, such as sodium hydroxide, potassium hydroxide, aqueous ammonia, ammonia gas, or a mixture thereof, with aqueous ammonia being particularly preferred. With such a first precipitant, the elements other than barium are precipitated as hydroxides.

The first precipitant may be added, for example, in the form of an aqueous solution at a suitable concentration to the suspension obtained from step (D) under stirring, or in the case of ammonia gas, by bubbling the suspension with the ammonia gas in the reactor under stirring. The amount of the precipitant to be added may easily be determined by monitoring the pH change of the suspension. Usually, the amount at which a precipitate is generated in the suspension at pH 7 to 9, preferably pH 7.5 to 8.5, is sufficient.

Step (E) may be carried out after the cerium suspension obtained from step (D) is cooled. Such cooling may usually be carried out under stirring according to a commonly known method. Cooling in an atmosphere or forced cooling with cooling tubes may be employed. The cooling may be carried out down to usually 40 °C or lower, preferably about a room temperature of 20 to 30 °C.

The method of the present invention includes step (F) of adding a second precipitant to obtain a precipitate containing barium.

The second precipitant used in step (F) may be, for example, ammonium bicarbonate. With such a second precipitant, barium is precipitated as a carbonate.

The second precipitant may be added, for example, in the form of a powder, or an aqueous solution at a suitable concentration, to the suspension obtained from step (E) under stirring. The amount of the second precipitant to be added for obtaining a precipitate in the form of a carbonate may be in excess of twice the stoichiometric amount required for reacting the entire amount of barium into a carbonate, for complete reaction.

Through the precipitation reaction in step (F), a slurry containing a precipitate of cerium oxide hydrate with grown crystals is obtained. The precipitate may be separated by, for example, the Nutsche method, centrifugation, or filter-pressing. The precipitate may optionally be washed with water as needed. Further, in order to improve the efficiency in the following step (G), the obtained precipitate may optionally be dried or calcined to a suitable extent.

Such calcination may preferably be carried out at usually 250 to 500 °C, particularly 280 to 450 °C, for usually 30 minutes to 36 hours, particularly 1 hour to 24 hours, more particularly 3 to 20 hours.

The method of the present invention includes step (G) of calcining the precipitate obtained from step (F). The temperature for the calcination is usually 300 to 700 °C, preferably 350 to 600 °C.

The duration of calcination in step (G) may suitably be decided in view of the calcination temperature, and may usually be 1 to 10 hours.

According to the method of the present invention, the composite oxide obtained from step (G) may be ground into powder before use. The grinding may be carried out with a commonly used pulverizer, such as a hammer mill, to sufficiently give a powder of a desired powder size.

The particle size of the composite oxide powder obtained by the present method may be made as desired through the above-mentioned grinding, and may preferably be a mean particle diameter of 1 to 50 µm for use as a co-catalyst for a catalyst for purifying exhaust gas.

The catalyst for purifying exhaust gas according to the present invention is not particularly limited as long as the catalyst is provided with a co-catalyst containing the composite oxide of the present invention. The method of production of the catalyst and other materials to be used therein may be, for example, conventional.

### EXAMPLES

The present invention will now be explained in more detail with reference to Examples and Comparative Examples, which are not intended to limit the present invention.

### Example 1

This example relates to a composite oxide of cerium, barium, and silicon at 90:5:5 by mass in terms of oxides.

100 g in terms of CeO₂ of a ceric nitrate solution not less than 90 mole % of which cerium ions were tetravalent was measured out, and the total volume was adjusted to 2 L with pure water. The obtained solution was heated to 100 °C, held at this temperature for 30 minutes, and allowed to cool down to the room temperature, to thereby obtain a cerium suspension.

After the mother liquor was removed from the cerium suspension thus obtained, 8.9 g of barium nitrate (5.2 g in terms of BaO) and 25.4 g of colloidal silica (5.2 g in terms of SiO₂) were added, and the total volume was adjusted to 2 L with pure water.

Then the cerium suspension containing the precursors of barium oxide and silicon oxide was held at 120 °C for 2 hours, allowed to cool, and neutralized to pH 8.5 with aqueous ammonia to confirm precipitation. Further, 10.8 g of ammonium bicarbonate was added, so that a precipitate was formed.

The obtained slurry was subjected to solid-liquid separation by Nutsche filtering to obtain a filter cake, which was calcined at 500 °C for 10 hours in the atmosphere to obtain a composite oxide powder. This composite oxide powder was subjected to quantitative analysis by ICP to determine its composition, which was cerium oxide, barium oxide, and silicon oxide at 90:5:5 by mass.

The specific surface area of the composite oxide powder was measured by the BET method after calcination in the air at 800 °C for 2 hours, or in the alternative, at 900 °C for 2 hours. Further, the calcined composite oxide was subjected to X-ray diffraction at a tube voltage of 40 kV, tube current of 40 mA, scan speed of 1 °/min., and sampling interval of 0.01 °, to confirm the presence/absence of a BaCeO₃ phase. The CeO₂ crystallite size in the (111) plane of the calcined composite oxide was determined, using the Scherrer equation, from the half width of the peak of the X-ray diffraction pattern. The results are shown in Table 1.

### Example 2

This example relates to a composite oxide of cerium, barium, and silicon at 85:10:5 by mass in terms of oxides.

100 g in terms of CeO₂ of a ceric nitrate solution not less than 90 mole % of which cerium ions were tetravalent was measured out, and the total volume was adjusted to 2 L with pure water. The obtained solution was heated to 100 °C, held at this temperature for 30 minutes, and allowed to cool down to the room temperature, to thereby obtain a cerium suspension.

After the mother liquor was removed from the cerium suspension thus obtained, 18.8 g of barium nitrate (11.0 g in terms of BaO) and 26.9 g of colloidal silica (5.5 g in terms of SiO₂) were added, and the total volume was adjusted to 2 L with pure water.

Then the cerium suspension containing the precursors of barium oxide and silicon oxide was held at 120 °C for 2 hours, allowed to cool, and neutralized to pH 8.5 with aqueous ammonia to confirm precipitation. Further, 22.8 g of ammonium bicarbonate was added, so that a precipitate was formed.

The obtained slurry was subjected to solid-liquid separation by Nutsche filtering to obtain a filter cake, which was calcined at 500 °C for 10 hours in the atmosphere to obtain a composite oxide powder. This composite oxide powder was subjected to quantitative analysis by ICP to determine its composition, which was cerium oxide, barium oxide, and silicon oxide at 85:10:5 by mass.

The properties of the obtained composite oxide powder were evaluated in the same way as in Example 1. The results are shown in Table 1.

### Example 3

This example relates to a composite oxide of cerium, barium, and silicon at 70:20:10 by mass in terms of oxides.

100 g in terms of CeO₂ of a ceric nitrate solution not less than 90 mole % of which cerium ions were tetravalent was measured out, and the total volume was adjusted to 2 L with pure water. The obtained solution was heated to 100 °C, held at this temperature for 30 minutes, and allowed to cool down to the room temperature, to thereby obtain a cerium suspension.

After the mother liquor was removed from the cerium suspension thus obtained, 45.7 g of barium nitrate (26.7 g in terms of BaO) and 65.5 g of colloidal silica (13.4 g in terms of SiO₂) were added, and the total volume was adjusted to 2 L with pure water.

Then the cerium suspension containing the precursors of barium oxide and silicon oxide was held at 120 °C for 2 hours, allowed to cool, and neutralized to pH 8.5 with aqueous ammonia to confirm precipitation. Further, 55.5 g of ammonium bicarbonate was added, so that a precipitate was formed.

The obtained slurry was subjected to solid-liquid separation by Nutsche filtering to obtain a filter cake, which was calcined at 500 °C for 10 hours in the atmosphere to obtain a composite oxide powder. This composite oxide powder was subjected to quantitative analysis by ICP to determine its composition, which was cerium oxide, barium oxide, and silicon oxide at 70:20:10 by mass.

The properties of the obtained composite oxide powder were evaluated in the same way as in Example 1. The results are shown in Table 1.

### Example 4

This example relates to a composite oxide of cerium, barium, and silicon at 75:5:20 by mass in terms oxides.

100 g in terms of CeO₂ of a ceric nitrate solution not less than 90 mole % of which cerium ions were tetravalent was measured out, and the total volume was adjusted to 2 L with pure water. The obtained solution was heated to 100 °C, held at this temperature for 30 minutes, and allowed to cool down to the room temperature, to thereby obtain a cerium suspension.

After the mother liquor was removed from the cerium suspension thus obtained, 10.6 g of barium nitrate (6.2 g in terms of BaO) and 122.0 g of colloidal silica (25.0 g in terms of SiO₂) were added, and the total volume was adjusted to 2 L with pure water.

Then the cerium suspension containing the precursors of barium oxide and silicon oxide was held at 120 °C for 2 hours, allowed to cool, and neutralized to pH 8.5 with aqueous ammonia to confirm precipitation. Further, 12.9 g of ammonium bicarbonate was added, so that a precipitate was formed.

The obtained slurry was subjected to solid-liquid separation by Nutsche filtering to obtain a filter cake, which was calcined at 500 °C for 10 hours in the atmosphere to obtain a composite oxide powder. This composite oxide powder was subjected to quantitative analysis by ICP to determine its composition, which was cerium oxide, barium oxide, and silicon oxide at 75:5:20 by mass.

The properties of the obtained composite oxide powder were evaluated in the same way as in Example 1. The results are shown in Table 1.

### Example 5

This example relates to a composite oxide of cerium, zirconium, lanthanum, barium, and silicon at 78:8:4:5:5 by mass in terms of oxides.

100 g in terms of CeO₂ of a ceric nitrate solution not less than 90 mole % of which cerium ions were tetravalent was measured out, and the total volume was adjusted to 2 L with pure water. The obtained solution was heated to 100 °C, held at this temperature for 30 minutes, and allowed to cool down to the room temperature, to thereby obtain a cerium suspension.

After the mother liquor was removed from the cerium suspension thus obtained, 32.4 ml of a zirconium oxynitrate solution (9.6 g in terms of ZrO₂), 15.8 ml of a lanthanum nitrate solution (4.8 g in terms of La₂O₃), 10.3 g of barium nitrate (6.0 g in terms of BaO), and 29.3 g of colloidal silica (6.0 g in terms of SiO₂) were added, and the total volume was adjusted to 2 L with pure water.

Then the cerium suspension containing the precursors of zirconium oxide, lanthanum oxide, barium oxide, and silicon oxide was held at 120 °C for 2 hours, allowed to cool, and neutralized to pH 8.5 with aqueous ammonia to confirm precipitation. Further, 12.5 g of ammonium bicarbonate was added, so that a precipitate was formed.

The obtained slurry was subjected to solid-liquid separation by Nutsche filtering to obtain a filter cake, which was calcined at 500 °C for 10 hours in the atmosphere to obtain a composite oxide powder. This composite oxide powder was subjected to quantitative analysis by ICP to determine its composition, which was cerium oxide, zirconium oxide, lanthanum oxide, barium oxide, and silicon oxide at 78:8:4:5:5 by mass.

The properties of the obtained composite oxide powder were evaluated in the same way as in Example 1. The results are shown in Table 1.

### Example 6

This example relates to a composite oxide of cerium, yttrium, barium, and silicon at 85:5:5:5 by mass in terms of oxides.

100 g in terms of CeO₂ of a ceric nitrate solution not less than 90 mole % of which cerium ions were tetravalent was measured out, and the total volume was adjusted to 2 L with pure water. The obtained solution was heated to 100 °C, held at this temperature for 30 minutes, and allowed to cool down to the room temperature, to thereby obtain a cerium suspension.

After the mother liquor was removed from the cerium suspension thus obtained, 22.0 ml of an yttrium nitrate solution (5.5 g in terms of Y₂O₃), 9.4 g of barium nitrate (5.5 g in terms of BaO), and 26.8 g of colloidal silica (5.5 g in terms of SiO₂) were added, and the total volume was adjusted to 2 L with pure water.

Then the cerium suspension containing the precursors of yttrium oxide, barium oxide, and silicon oxide was held at 120 °C for 2 hours, allowed to cool, and neutralized to pH 8.5 with aqueous ammonia to confirm precipitation. Further, 11.5 g of ammonium bicarbonate was added, so that a precipitate was formed.

The obtained slurry was subjected to solid-liquid separation by Nutsche filtering to obtain a filter cake, which was calcined at 500 °C for 10 hours in the atmosphere to obtain a composite oxide powder. This composite oxide powder was subjected to quantitative analysis by ICP to determine its composition, which was cerium oxide, yttrium oxide, barium oxide, and silicon oxide at 85:5:5:5 by mass.

The properties of the obtained composite oxide powder were evaluated in the same way as in Example 1. The results are shown in Table 1.

### Example 7

This example relates to a composite oxide of cerium, lanthanum, barium, and silicon at 85:5:5:5 by mass in terms of oxides.

A composite oxide powder was prepared in the same way as in Example 6, except that the yttrium nitrate solution was replaced with 18.1 ml of a lanthanum nitrate solution (5.5 g in terms of La₂O₃). The obtained composite oxide powder was subjected to quantitative analysis by ICP to determine its composition, which was cerium oxide, lanthanum oxide, barium oxide, and silicon oxide at 85:5:5:5 by mass.

The properties of the obtained composite oxide powder were evaluated in the same way as in Example 1. The results are shown in Table 1.

### Example 8

This example relates to a composite oxide of cerium, praseodymium, barium, and silicon at 85:5:5:5 by mass in terms of oxides.

A composite oxide powder was prepared in the same way as in Example 6, except that the yttrium nitrate solution was replaced with 11.3 ml of a praseodymium nitrate solution (5.5 g in terms of Pr₆O₁₁). The obtained composite oxide powder was subjected to quantitative analysis by ICP to determine its composition, which was cerium oxide, praseodymium oxide, barium oxide, and silicon oxide at 85:5:5:5 by mass.

The properties of the obtained composite oxide powder were evaluated in the same way as in Example 1. The results are shown in Table 1.

### Example 9

This example relates to a composite oxide of cerium, neodymium, barium, and silicon at 85:5:5:5 by mass in terms of oxides.

A composite oxide powder was prepared in the same way as in Example 6, except that the yttrium nitrate solution was replaced with 21.4 ml of a neodymium nitrate solution (5.5 g in terms of Nd₂O₃). The obtained composite oxide powder was subjected to quantitative analysis by ICP to determine its composition, which was cerium oxide, neodymium oxide, barium oxide, and silicon oxide at 85:5:5:5 by mass.

The properties of the obtained composite oxide powder were evaluated in the same way as in Example 1. The results are shown in Table 1.

### Example 10

This example relates to a composite oxide of cerium, barium, aluminum, and silicon at 80:10:5:5 by mass in terms of oxides.

100 g in terms of CeO₂ of a ceric nitrate solution not less than 90 mole % of which cerium ions were tetravalent was measured out, and the total volume was adjusted to 2 L with pure water. The obtained solution was heated to 100 °C, held at this temperature for 30 minutes, and allowed to cool down to the room temperature, to thereby obtain a cerium suspension.

After the mother liquor was removed from the cerium suspension thus obtained, 19.9 g of barium nitrate (11.7 g in terms of BaO), 43.8 g of aluminum nitrate nonahydrate (5.9 g in terms of Al₂O₃), and 28.5 g of colloidal silica (5.9 g in terms of SiO₂) were added, and the total volume was adjusted to 2 L with pure water.

Then the cerium suspension containing the precursors of barium oxide, aluminum oxide, and silicon oxide was held at 120 °C for 2 hours, allowed to cool, and neutralized to pH 8.5 with aqueous ammonia to confirm precipitation. Further, 24.3 g of ammonium bicarbonate was added, so that a precipitate was formed.

The obtained slurry was subjected to solid-liquid separation by Nutsche filtering to obtain a filter cake, which was calcined at 500 °C for 10 hours in the atmosphere to obtain a composite oxide powder. This composite oxide powder was subjected to quantitative analysis by ICP to determine its composition, which was cerium oxide, barium oxide, aluminum oxide, and silicon oxide at 80:10:5:5 by mass.

The properties of the obtained composite oxide powder were evaluated in the same way as in Example 1. The results are shown in Table 1.

### Example 11

This example relates to a composite oxide of cerium, barium, and silicon at 90:5:5 by mass in terms of oxides, synthesized by a method different from Example 1.

301.7 ml of a cerous nitrate solution (45 g in terms of CeO₂), 4.3 g of barium nitrate (2.5 g in terms of BaO), and 12.2 g of colloidal silica (2.5 g in terms of SiO₂) were dissolved in pure water to give 500 ml of an aqueous solution.

This solution was added to an aqueous solution of a precipitant, i.e., 64.5 g of ammonium bicarbonate dissolved in pure water to bring the total volume to 500 ml, at room temperature over 30 minutes, with the pH maintained at 8.0 with aqueous ammonia, so that a precipitate was formed.

The obtained slurry was subjected to solid-liquid separation by Nutsche filtering to obtain a filter cake, which was calcined at 500 °C for 10 hours in the atmosphere to obtain a composite oxide powder. This composite oxide powder was subjected to quantitative analysis by ICP to determine its composition, which was cerium oxide, barium oxide, and silicon oxide at 90:5:5 by mass.

The properties of the obtained composite oxide powder were evaluated in the same way as in Example 1. The results are shown in Table 1.

### Comparative Example 1

This example relates to a composite oxide of cerium and barium at 95:5 by mass in terms of oxides.

100 g in terms of CeO₂ of a ceric nitrate solution not less than 90 mole % of which cerium ions were tetravalent was measured out, and the total volume was adjusted to 2 L with pure water. The obtained solution was heated to 100 °C, held at this temperature for 30 minutes, and allowed to cool down to the room temperature, to thereby obtain a cerium suspension.

After the mother liquor was removed from the cerium suspension thus obtained, 8.4 g of barium nitrate (4.9 g in terms of BaO) was added, and the total volume was adjusted to 2 L with pure water.

Then the cerium suspension containing the precursor of barium oxide was held at 120 °C for 2 hours, allowed to cool, and neutralized to pH 8.5 with aqueous ammonia to confirm precipitation. Further, 10.2 g of ammonium bicarbonate was added, so that a precipitate was formed.

The obtained slurry was subjected to solid-liquid separation by Nutsche filtering to obtain a filter cake, which was calcined at 500 °C for 10 hours in the atmosphere to obtain a composite oxide powder. This composite oxide powder was subjected to quantitative analysis by ICP to determine its composition, which was cerium oxide and barium oxide at 95:5 by mass.

The properties of the obtained composite oxide powder were evaluated in the same way as in Example 1. The results are shown in Table 1.

### Comparative Example 2

This example relates to a composite oxide of cerium and barium at 90:10 by mass in terms of oxides.

100 g in terms of CeO₂ of a ceric nitrate solution not less than 90 mole % of which cerium ions were tetravalent was measured out, and the total volume was adjusted to 2 L with pure water. The obtained solution was heated to 100 °C, held at this temperature for 30 minutes, and allowed to cool down to the room temperature, to thereby obtain a cerium suspension.

After the mother liquor was removed from the cerium suspension thus obtained, 17.8 g of barium nitrate (10.4 g in terms of BaO) was added, and the total volume was adjusted to 1 L with pure water.

Then the cerium suspension containing the precursor of barium oxide was held at 120 °C for 2 hours, allowed to cool, and neutralized to pH 8.5 with aqueous ammonia to confirm precipitation. Further, 21.6 g of ammonium bicarbonate was added, so that a precipitate was formed.

The obtained slurry was subjected to solid-liquid separation by Nutsche filtering to obtain a filter cake, which was calcined at 500 °C for 10 hours in the atmosphere to obtain a composite oxide powder. This composite oxide powder was subjected to quantitative analysis by ICP to determine its composition, which was cerium oxide and barium oxide at 90:10 by mass.

The properties of the obtained composite oxide powder were evaluated in the same way as in Example 1. The results are shown in Table 1.

**Table 1**

| | **Composition of composite oxide in terms of oxides (mass%)** | **Specific surface area (m²/g)** | | **Formation of BaCeO₃ phase/CeO₂ crystallite size in the (111) plane (nm)** | |
|---|---|---|---|---|---|
| | | **800°C/2h** | **900°C/2h** | **800°C/2h** | **900°C/2h** |
| Ex 1 | Ce/Ba/Si = 90/5/5 | 118 | 64 | NO/12 | NO/16 |
| Ex 2 | Ce/Ba/Si = 85/10/5 | 88 | 36 | NO/13 | YES/19 |
| Ex 3 | Ce/Ba/Si = 70/20/10 | 65 | 31 | NO/13 | YES/21 |
| Ex 4 | Ce/Ba/Si = 75/5/20 | 128 | 76 | NO/11 | NO/14 |
| Ex 5 | Ce/Zr/La/Ba/Si = 78/8/4/5/5 | 93 | 74 | NO/11 | NO/16 |
| Ex 6 | Ce/Y/Ba/Si = 85/5/5/5 | 92 | 58 | NO/10 | NO/15 |
| Ex 7 | Ce/La/Ba/Si = 85/5/5/5 | 95 | 61 | NO/13 | NO/18 |
| Ex 8 | Ce/Pr/Ba/Si = 85/5/5/5 | 88 | 55 | NO/11 | NO/15 |
| Ex 9 | Ce/Nd/Ba/Si = 85/5/5/5 | 92 | 63 | NO/12 | NO/16 |
| Ex 10 | Ce/Ba/Al/Si = 80/10/5/5 | 86 | 53 | NO/12 | YES/20 |
| Ex 11 | Ce/Ba/Si = 90/5/5 | 56 | 30 | NO/17 | NO/20 |
| Corp. Ex 1 | Ce/Ba = 95/5 | 17 | 8 | YES/52 | YES/79 |
| Corp. Ex 2 | Ce/Ba = 90/10 | 15 | 8 | YES/56 | YES/82 |

The results in Table 1 clearly show that, in the composite oxides of the present invention with the particular ratio of silicon contained, specific surface areas after calcination at 800 °C or higher were significantly improved, formation of a BaCeO₃ phase was prevented, the CeO₂ crystallite size was kept small, and the phase stability is excellent.

Further, by the production method of the present invention, the composite oxides having a large specific surface area and high phase stability may be synthesized.

## Claims

1. A composite oxide comprising:
▪ 50 to 98 mass% of a cerium-containing oxide, consisting of oxides of cerium and of at least one element selected from the group consisting of rare earth metal elements other than cerium and including yttrium, zirconium, and aluminium at 85:15 to 100:0 by mass;
▪ 1 to 30 mass% of an oxide of barium; and
▪ 5 to 18 mass% of SiO₂;
wherein after calcination at 800°C for 2 hours, said composite oxide:
▪ exhibits a specific surface area which is not smaller than 60 m²/g as measured by the BET method;
▪ has no BaCeO₃ phase;
▪ has a CeO₂ crystallite size in (111) plane which is not larger than 15 nm, as determined by X-ray diffraction.

2. The composite oxide according to claim 1, wherein the content of the oxide of barium is 1 to 20 mass%.

3. The composite oxide according to claim 1 or 2, wherein said composite oxide has a specific surface area of not smaller than 80 m²/g as measured by the BET method after calcination at 800°C for 2 hours.

4. The composition oxide according to any one of claims 1 to 3, wherein the element selected from the group consisting of rare earth metal elements other than cerium and including yttrium is yttrium, lanthanum, praseodymium, neodymium, samarium, europium, gadolinium, terbium, dysprosium, holmium, erbium, thulium, ytterbium, lutetium, or a mixture of two or more of these.

5. A method for producing a composite oxide according to any one of claims 1 to 4 comprising the steps of:
(A) providing a cerium solution not less than 90 mole % of which cerium ions are tetravalent,
(B) heating up to not lower than 60°C the cerium solution obtained from step (A) and holding the solution at not lower than 60°C to obtain a cerium suspension,
(C) adding at least precursors of barium oxide and silicon oxide to said cerium suspension obtained from step (B) to obtain a suspension,
(D) heating up to not lower than 100°C the suspension obtained from step (C) and holding the suspension at not lower than 100°C,
(E) adding a first precipitant to said suspension obtained from step (D) to precipitate elements other than barium,
(F) adding a second precipitant to obtain a precipitate containing barium, and
(G) calcining said precipitate obtained from step (F).

6. The method according to claim 5, wherein in step (C), a precursor of an oxide of at least one element selected from the group consisting of rare earth metal elements other than cerium and including yttrium, zirconium, and aluminum, is further added to said cerium suspension obtained from step (B).

7. A catalyst for purifying exhaust gas comprising the composite oxide of any one of claims 1 to 4.

## Patentansprüche

1. Mischoxid, umfassend:
▪ 50 bis 98 Massen-% eines cerhaltigen Oxids, bestehend aus Oxiden von Cer und mindestens einem Element aus der Gruppe bestehend aus Seltenerdmetallelementen, die von Cer verschieden sind und Yttrium einschließen, Zirconium und Aluminium in einem Massenverhältnis von 85:15 bis 100:0;
▪ 1 bis 30 Massen-% eines Oxids von Barium und
▪ 5 bis 18 Massen-% SiO₂;
wobei das Mischoxid nach Calcinierung bei 800 °C über einen Zeitraum von 2 Stunden
▪ eine nach der BET-Methode gemessene spezifische Oberfläche aufweist, die nicht kleiner als 60 m²/g ist;
▪ keine BaCeO₃-Phase aufweist;
▪ eine durch Röntgenbeugung bestimmte CeO₂-Kristallitgröße in der (111)-Ebene aufweist, die nicht größer als 15 nm ist.

2. Mischoxid nach Anspruch 1, wobei der Gehalt des Oxids von Barium 1 bis 20 Massen-% beträgt.

3. Mischoxid nach Anspruch 1 oder 2, wobei das Mischoxid nach Calcinierung bei 800 °C über einen Zeitraum von 2 Stunden eine nach der BET-Methode gemessene spezifische Oberfläche aufweist, die nicht kleiner als 80 m²/g ist.

4. Mischoxid nach einem der Ansprüche 1 bis 3, wobei es sich bei dem Element aus der Gruppe bestehend aus Seltenerdmetallelementen, die von Cer verschieden sind und Yttrium einschließen, um Yttrium, Lanthan, Praseodym, Neodym, Samarium, Europium, Gadolinium, Terbium, Dysprosium, Holmium, Erbium, Thulium, Ytterbium, Lutetium oder eine Mischung von zwei oder mehr davon handelt.

5. Verfahren zur Herstellung eines Mischoxid nach einem der Ansprüche 1 bis 4, das folgende Schritte umfasst:
(A) Bereitstellen einer Cerlösung, wobei nicht weniger als 90 Mol-% der Cerionen vierwertig sind,
(B) Erhitzen der aus Schritt (A) erhaltenen Cerlösung auf nicht weniger als 60 °C und Halten der Lösung bei nicht weniger als 60 °C zum Erhalt einer Cersuspension,
(C) Zugeben von mindestens Vorstufen von Bariumoxid und Siliciumoxid zu der aus Schritt (B) erhaltenen Cersuspension zum Erhalt einer Suspension,
(D) Erhitzen der aus Schritt (C) erhaltenen Suspension auf nicht weniger als 100 °C und Halten der Suspension bei nicht weniger als 100 °C,
(E) Zugeben eines ersten Fällungsmittels zu der aus Schritt (D) erhaltenen Suspension zur Ausfällung von Elementen, die von Barium verschieden sind,
(F) Zugeben eines zweiten Fällungsmittels zum Erhalt eines bariumhaltigen Niederschlags und
(G) Calcinieren des aus Schritt (F) erhaltenen Niederschlags.

6. Verfahren nach Anspruch 5, bei dem in Schritt (C) ferner eine Vorstufe eines Oxids mindestens eines Elements aus der Gruppe bestehend aus Seltenerdmetallelementen, die von Cer verschieden sind und Yttrium einschließen, Zirconium und Aluminium zu der aus Schritt (B) erhaltenen Cersuspension gegeben wird.

7. Katalysator zum Reinigen von Abgas, umfassend das Mischoxid nach einem der Ansprüche 1 bis 4.

## Revendications

1. Oxyde composite comprenant :
• 50 à 98 % en masse d'un oxyde contenant du cérium, constitué d'oxyde de cérium et d'au moins un élément choisi dans le groupe constitué par des éléments métalliques des terres rares autres que le cérium et comprenant l'yttrium, le zirconium et l'aluminium à raison de 85 :15 à 100 :0 en masse ;
• 1 à 30 % en masse d'un oxyde de baryum ; et
• 5 à 18 % en masse de SiO₂ ;
dans lequel après calcination à 800 °C pendant 2 heures, ledit composite d'oxyde :
• présente une aire de surface spécifique qui est supérieure ou égale à 60 m²/g telle que mesurée par la méthode BET ;
• ne possède pas de phase BaCeO₃ ;
• possède une grosseur de cristallite de CeO₂ dans le plan (111) qui n'est pas plus grande que 15 nm, telle que déterminée par diffraction des rayons X.

2. Oxyde composite selon la revendication 1, la teneur de l'oxyde de baryum étant de 1 à 20 % en masse.

3. Oxyde composite selon la revendication 1 ou 2, ledit oxyde composite possédant une aire de surface spécifique qui est supérieure ou égale à 80 m²/g telle que mesurée par la méthode BET après calcination à 800 °C pendant 2 heures.

4. Oxyde composite selon l'une quelconque des revendications 1 à 3, l'élément choisi dans le groupe constitué par des éléments métalliques des terres rares autres que le cérium et comprenant l'yttrium étant l'yttrium, le lanthane, le praséodyme, le néodyme, le samarium, l'europium, le gadolinium, le terbium, le dysprosium, l'holmium, l'erbium, le thulium, l'ytterbium, le lutétium, ou un mélange de deux ou plus de ceux-ci.

5. Procédé pour la production d'un oxyde composite selon l'une quelconque des revendications 1 à 4 comprenant les étapes de :
(A) mise à disposition d'une solution de cérium dont pas moins de 90 % en moles des ions cérium sont tétravalents,
(B) chauffage de la solution de cérium obtenue de l'étape (A) jusqu'à pas moins de 60 °C et maintien de la solution à pas moins de 60 °C pour obtenir une suspension de cérium,
(C) ajout d'au moins des précurseurs d'oxyde de baryum et d'oxyde de silicium à ladite suspension de cérium obtenue de l'étape (B) pour obtenir un suspension,
(D) chauffage de la suspension obtenue de l'étape (C) jusqu'à pas moins de 100 °C et maintien de la suspension à pas moins de 100 °C,
(E) ajout d'un premier agent précipitant à ladite suspension obtenue de l'étape (D) pour précipiter des éléments autres que le baryum,
(F) ajout d'un deuxième agent précipitant pour obtenir un précipité contenant du baryum, et
(G) calcination dudit précipité obtenu de l'étape (F).

6. Procédé selon la revendication 5, dans lequel dans l'étape (C), un précurseur d'un oxyde d'au moins un élément choisi dans le groupe constitué par des éléments métalliques des terres rares autres que le cérium et comprenant l'yttrium, le zirconium et l'aluminium, est en outre ajouté à ladite suspension de cérium obtenue de l'étape (B).

7. Catalyseur pour la purification de gaz d'échappement comprenant l'oxyde composite selon l'une quelconque des revendications 1 à 4.
